# EUROPÄISCHE PATENTSCHRIFT

(11) **EP 3 300 491 B1**
(45) Veröffentlichungstag und Bekanntmachung des Hinweises auf die Patenterteilung: **10.04.2019**
(21) Anmeldenummer: 16721099.6
(22) Anmeldetag: 20.04.2016
(51) Int. Cl.: B65B 35/44, B65B 59/00, B65G 15/44, B65G 17/26, B65G 17/44, B65B 35/24, B65G 15/42, B65G 17/32, B65G 17/46, B65G 37/00, B65G 47/08

(54) **RUNDLAUF-GRUPPIERUNGSMODUL MIT LÖSBAREM SCHLITTEN UND ZUGEHÖRIGES VERFAHREN**
ENDLESS GROUPING MODULE WITH REMOVABLE CARRIAGE AND METHOD
MODULE DE GROUPAGE SANS FIN AVEC UN CHARRIOT ET PROCÉDÉ

(30) Priorität: 27.04.2015 US 201514696618 P
(43) Veröffentlichungstag der Anmeldung: 04.04.2018
(73) Patentinhaber: KHS GmbH, 44143 Dortmund (DE)
(72) Erfinder: PEEBLES, Scott, Bradenton, Florida 34202 (US); KOBATA, Jason, Sarasota, FL 34233 (US)
(86) Internationale Anmeldenummer: PCT/EP2016/058748
(87) Internationale Veröffentlichungsnummer: WO 2016/173899

(56) Entgegenhaltungen:
- EP-A1- 2 500 296
- EP-A2- 1 911 697
- WO-A1-01/32510
- WO-A1-02/36465
- WO-A1-2011/131385
- US-A- 5 755 317
- US-A1- 2003 057 058

## Beschreibung

Die vorliegende Erfindung betrifft Rundlauf-Gruppierungsmodule für den Einsatz in Verpackungsanwendungen.

Rundlauf-Gruppierungsmodule werden in der Verpackungsindustrie zum Sammeln einer vorausbestimmten Anzahl von Beuteln, Packungen oder sonstigen Artikeln, die an einem Ladepunkt serienweise zugeführt werden, und dann zum Befördern der vorausbestimmten Anzahl von Artikeln in paralleler Anordnung zu einem Entladepunkt eingesetzt. Häufig werden die Artikel einzeln von einem horizontalen Förderband am Ladepunkt aufgenommen und am Entladepunkt gewöhnlich in eine Schachtel, einen Karton oder sonstigen Behälter gegeben.

Ein Rundlauf-Gruppierungsmodul hat üblicherweise zwei Fächersätze, wobei jeder Satz auf seinem eigenen Gurt, seiner eigenen Kette oder seinem eigenen Endlosantrieb befestigt ist. Die zwei Endlosantriebe laufen nebeneinander um das Gruppierungsmodul, wobei jeder Fächersatz auch das andere Antriebselement überspannt, so dass alle Fächer innerhalb der gleichen Rundlaufbahn um das Gruppierungsmodul laufen. Die Antriebselemente sind so angetrieben, dass, sobald ein Fächersatz am Entladepunkt entladen ist, der Satz zurück zum Ladepunkt "läuft", um für die Aufnahme von Artikeln ohne Unterbrechung bereit zu sein, wenn das Laden des anderen Fächersatzes beendet ist und dieser zum Entladepunkt befördert wird.

Wenn die Verpackungslinie, in der ein Rundlauf-Gruppierungsmodul eingesetzt wird, umgestellt wird, ist es manchmal notwendig, auch das Rundlauf-Gruppierungsmodul anzupassen. Wenn zum Beispiel eine andere Anzahl von Artikeln in einen Behälter geladen werden soll, kann es notwendig sein, die Anzahl von Fächern, die auf den Endlosantrieben befestigt sind, zu ändern. Wenn Artikel einer anderen Größe zu befördern sind, kann es notwendig sein, die Teilung der Fächer (d.h. den Abstand dazwischen) zu ändern. Umstellungen wie diese können ein umfassendes Zerlegen des Rundlauf-Gruppierungsmoduls sowie den Austausch der Endlosantriebe und sonstiger Antriebskomponenten erfordern. Dies kann wiederum zu einer längeren Stillstandszeit der Verpackungslinie führen.

Obwohl Rundlauf-Gruppierungsmodule wirkungsvolle Komponenten einer Verpackungslinie sind, sind weitere Verbesserungen möglich.

Die Druckschrift WO 02/36465 A1 offenbart eine Vorrichtung zum Aufrichten von Beuteln, mit um zwei Umlenkrollen umlaufende Transportmittel, an denen jeweils mindestens eine Gruppe von Bechern befestigt ist, sowie mit einem Antrieb für mindestens je eines der Umlenkrollenpaare, wobei die Transportmittel als endlose Riemen ausgestaltet und an denen Befestigungsmittel zum Aufsetzen und Einrasten von Bechern angebracht sind.

Die Druckschrift WO 01/32510 A1 lehrt ein Verfahren, um eine Mehrfachpackung zu bilden, die aus einem Beutel aus Folienmaterial besteht, in dem mehr als sechs mit Chips oder anderem Material gefüllte Beutel verpackt sind. Dazu wird eine bestimmte Anzahl von in Reihenfolge angeordneten Beuteln zu einer Füll- / Form- / Verschließmaschine transportiert, wo ein großer Beutel aus Folie um die Beutel herum gebildet wird. Die gefüllten Beutel werden in mindestens zwei Beitel enthaltende, hintereinander angeordneten Reihen dem Zuführende eines mit Trägern versehenen Förderers zugeführt, wobei jede Reihe von Beuteln in dem Zwischenraum zwischen zwei aufeinanderfolgenden Trägern geführt wird. Die auf einer kurzen Kante stehenden Beutelreihen werden mit Hilfe des mit Trägern versehenen Förderers in eine Position bewegt, die einem Schieberelement gegenüberliegt, das die Beutelreihen aus dem Spalt zwischen den Trägern auf einen im wesentlichen horizontalen Förderer schiebt. Bei dem Förderer handelt es ich um ein mit Seitenführungen versehenes Band, welches die Gruppe von nebeneinander und nacheinander positionierten Beuteln der Füll- / Formgebungs- / Verschließmaschine zuführt.

Angesichts des Vorhergehenden ist eine Aufgabe der Erfindung, ein verbessertes Rundlauf-Gruppierungsmodul, einen abnehmbaren Schlitten zur Verwendung mit diesem und zugehörige Verfahren bereitzustellen. Gemäß einer Ausführungsform der vorliegenden Erfindung umfasst ein Rundlauf-Gruppierungsmodul einen Modulrahmen, erste und zweite Antriebsbaugruppen und erste und zweite Modulschlitten. Der Modulrahmen definiert eine Rundlaufbahn und die ersten und zweiten Antriebsbaugruppen sind jeweils daran befestigt. Jede Antriebsbaugruppe umfasst ein jeweiliger Endlosantrieb, das sich um die Rundlaufbahn erstreckt. Jeder Modulschlitten ist lösbar mit einem jeweiligen Endlosantrieb verbunden und umfasst ein flexibles Substrat, mit dem eine Vielzahl an Fächern verbunden ist.

Gemäß einem Aspekt der vorliegenden Erfindung umfasst der Modulrahmen eine Schlittenführung, die den ersten und zweiten Modulschlitten während der Bewegung des ersten und zweiten Endlosantriebs in der Rundlaufbahn hält. Die Schlittenführung kann ebenfalls gegenüberliegende seitliche Abschnitte umfassen, die in Führungsschlitze eingreifen, die auf gegenüberliegenden Seiten der Modulschlitten definiert sind.

Gemäß einem weiteren Aspekt der vorliegenden Erfindung umfasst jeder Modulschlitten überdies eine Vielzahl an Befestigungsleisten für die Fächer, wovon jede durch das flexible Substrat mit einem entsprechenden Fach verbunden ist. Gegenüberliegende Enden der Fächerbefestigungsleisten können gemeinsam die Führungsschlitze definieren.

Gemäß einem Verfahrensaspekt umfasst ein Verfahren zum Einstellen eines Rundlauf-Gruppierungsmoduls das Abnehmen eines Modulschlittens von einem Endlosantrieb des Rundlauf-Gruppierungsmoduls und das Anschließen eines anderen Modulschlittens an den Endlosantrieb anstelle des Abgenommenen. Die Fächerkonfiguration der Schlitten kann unterschiedlich sein zumindest in Bezug auf eine Fächerteilung oder eine Fächermenge.

Diese und andere Aufgaben, Aspekte und Vorteile der vorliegenden Erfindung werden angesichts der Zeichnungen und folgenden detaillierten Beschreibung bevorzugter Ausführungsformen besser zu erkennen sein.
Figur 1 ist eine perspektivische Ansicht eines Rundlauf-Gruppierungsmoduls, umfassend ein Paar abnehmbare Modulschlitten, die auf jeweiligen Endlosantrieben befestigt sind, gemäß einer Ausführungsform der vorliegenden Erfindung, zusammen mit einem angrenzenden Tragwerk;
Figur 2 ist eine teilweise auseinandergezogene, perspektivische Ansicht des Rundlauf-Gruppierungsmoduls aus Figur 1;
Figur 3 ist eine Seitenansicht eines typischen Beispiels der Modulschlitten aus Figur 1 und seines jeweiligen Endlosantriebs;
Figur 4 ist eine Detailansicht eines Abschnitts des Endlosantriebs aus Figur 3;
Figur 5 ist eine perspektivische Ansicht des Modulschlittens aus Figur 3; und
Figur 6 ist eine teilweise auseinandergezogene, perspektivische Ansicht des Modulschlittens aus Figur 3.

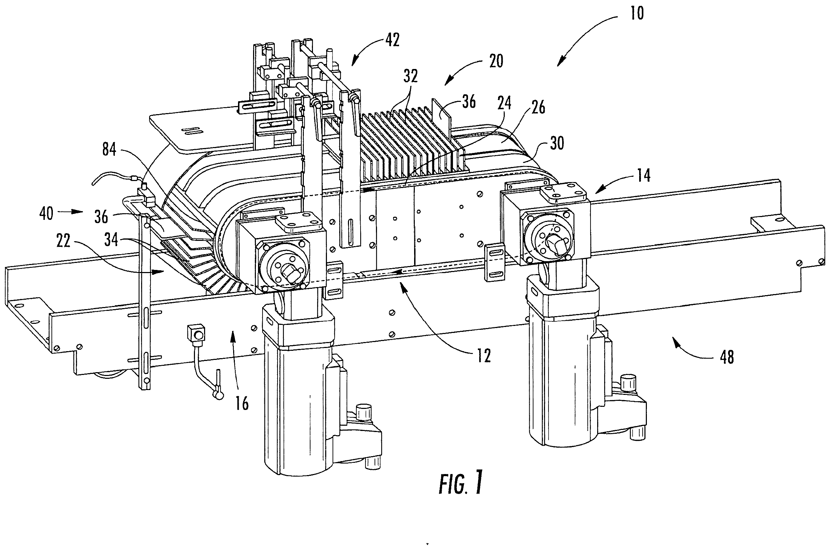

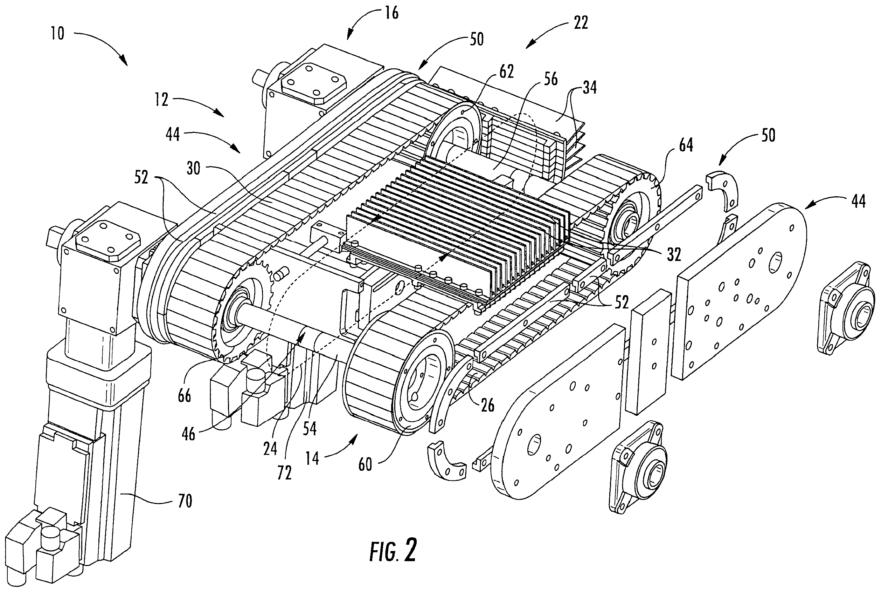

Bezug nehmend auf Figuren 1 und 2, gemäß einer Ausführungsform der vorliegenden Erfindung, umfasst ein Rundlauf-Gruppierungsmodul 10 einen Modulrahmen 12, erste und zweite Antriebsbaugruppen 14, 16 und erste und zweite Modulschlitten 20, 22. Der Modulrahmen 12 definiert eine Rundlaufbahn 24. Die erste und zweite Antriebsbaugruppe 14, 16, die am Modulrahmen 12 befestigt sind, umfassen jeweils ein Endlosantrieb 26, 30, der sich um die Rundlaufbahn 24 erstreckt. Der erste und zweite Modulschlitten 20, 22 umfassen jeweils eine Vielzahl flexibel verbundene Fächer 32, 34 und sind jeweils lösbar mit den Endlosantrieben 26, 30 verbunden. Die Antriebsbaugruppen 14, 16 sind betriebsfähig, die Endlosantriebe 26, 30 anzutreiben, um die Modulschlitten 20, 22 so anzuordnen, dass Artikel 36 an einem Ladepunkt 40 aufgenommen und die Artikel 36 zum parallelen Entladen an einem Entladepunkt 42 befördert werden. Wie nachstehend näher erläutert wird, sind die Modulschlitten 20, 22 einfach abnehmbar und austauschbar.

Der Modulrahmen 12 umfasst seitliche Rahmenabschnitte 44, die durch einen mittleren Rahmenabschnitt 46 verbunden sind. Der Modulrahmen 12 trägt die Antriebsbaugruppen 14, 16 in einem beabstandeten Verhältnis, um den allgemeinen Umfang der Rundlaufbahn 24 zu definieren. Der Modulrahmen 12 ist auf einem Tragwerk 48 befestigt, das einer Verpackungslinie zugeordnet ist. Der Modulrahmen 12 umfasst ebenfalls eine Schlittenführung 50, die sich vorzugsweise an den seitlichen Rahmenabschnitten 44 rund um die Rundlaufbahn 24 befindet. Die Schlittenführung 50 greift in die Modulschlitten 20, 22, um diese in der Rundlaufbahn 24 zu halten, während die Modulschlitten 20, 22 von den Endlosantrieben 26, 30 befördert werden.

Vorteilhafterweise hat die Schlittenführung 50 zwei gegenüberliegende seitliche Abschnitte, die den seitlichen Rahmenabschnitten 44 entsprechen, wovon jeder aus einem oder mehreren abnehmbaren Segmenten 52 besteht. Das Abnehmen eines derartigen Segments/derartiger Segmente 52 erleichtert das Abnehmen und Anbringen der Modulschlitten 20, 22. Die seitlichen Rahmenabschnitte 44 selbst können aus einer Vielzahl abnehmbarer Segmente gebildet sein, die mit oder getrennt von den Schlittenführungssegmenten 52 abgenommen werden können. In manchen Ausführungsformen kann die Schlittenführung 50 aus einem Stück mit den seitlichen Rahmenabschnitten 44 gebildet sein.

Die erste und zweite Antriebsbaugruppe 14, 16 umfassen überdies jeweilige Antriebswellen 54, 56, Antriebsscheiben 60, 62 und Freilaufscheiben 64, 66. Vorteilhafterweise werden die Antriebswellen 54, 56 von jeweiligen Servomotoren 70, 72 angetrieben. Die Antriebswelle 54 der ersten Antriebsbaugruppe 14 trägt die Antriebsscheibe 60 für den Endlosantrieb 26 sowie die Freilaufscheibe 66 für den Endlosantrieb 30. Die Antriebswelle 56 der zweiten Antriebsbaugruppe 16 trägt die Antriebsscheibe 62 für den Endlosantrieb 30 sowie die Freilaufscheibe 66 für den Endlosantrieb 26. In jedem Fall ist die Antriebsscheibe 60, 62 starr mit ihrer jeweiligen Antriebswelle 54, 56 verbunden und dreht sich mit dieser, wenn sie vom jeweiligen Servomotor 70, 72 angetrieben wird. Jede Freilaufscheibe 64, 66 ist in Bezug auf die jeweilige Antriebswelle 56, 54, an der sie befestigt ist, frei drehbar und dreht sich somit nur mit ihrer jeweiligen Antriebsscheibe 60, 62 durch die Bewegung ihres jeweiligen Endlosantriebs 26, 30.

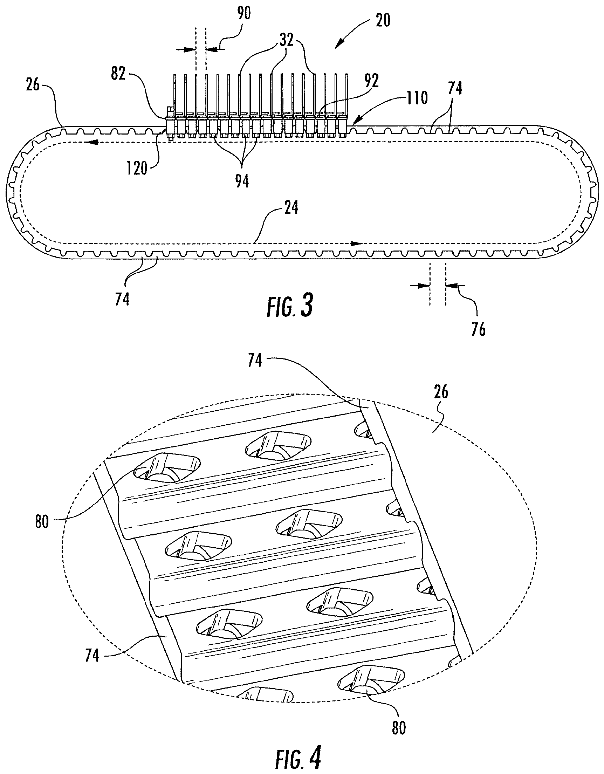

Vorzugsweise sind die Endlosantriebe 26, 30 im Wesentlichen identisch. In Figuren 3 und 4 ist zwecks sparender Veranschaulichung nur das Endlosantrieb 26 dargestellt. Ein Endlosantrieb 26 (30) umfasst eine Vielzahl an Segmenten, die durch eine Segmentteilung 76 getrennt sind, die vorzugsweise gleichmäßig ist. In der abgebildeten Ausführungsform ist der Endlosantrieb 26 (30) ein Antriebszahnriemen, jedoch könnten auch andere Elemente - segmentierte oder sonstige - verwendet werden, wie etwa eine Antriebskette.

Im Endlosantrieb 26 (30) erstrecken sich vorgeformte Vertiefungen 80 von einer Innenfläche in die Segmente 74. An mindestens einem der Segmente 74 ist eine Befestigung für den Anschluss an den Modulschlitten 20 (22) innerhalb der Vertiefung 80 angeordnet.

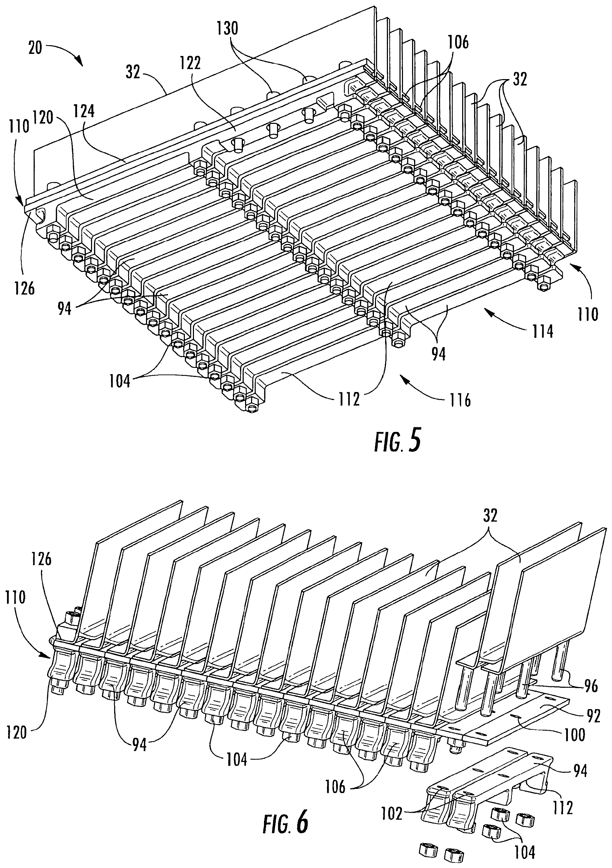

Die Modulschlitten 20, 22 sind im Aufbau im Wesentlichen identisch, sie unterscheiden sich nur darin, wo der Anschluss an dem jeweiligen Endlosantrieb 26, 30 erfolgt; wobei der Modulschlitten 20 entlang der linken Seite seiner Vorderkante 82 und der Modulschlitten 22 entlang der rechten Seite seiner Vorderkante 84 angeschlossen wird. Da die Modulschlitten 20, 22 ansonsten identisch sind, ist nur der Schlitten 20 in Figur 3, 5 und 6 dargestellt. Wie in Figuren 3, 5 und 6 zu sehen ist, umfasst der Modulschlitten 20 (22) die Vielzahl an Fächern 32 (34), die durch eine vorzugsweise gleichmäßige Fächerteilung 90 getrennt sind und gewöhnlich mit einem flexiblen Substrat 92 verbunden sind. Da der Modulschlitten 20 (22) nur entlang seiner Vorderkante 82 (84) an den Endlosantrieb 30 (32) angeschlossen ist, ist die Fächerteilung 90 von der Segmentteilung 76 vollkommen unabhängig, was bedeutet, dass die Fächerteilung 90 nicht gleich der Segmentteilung 76 oder ein ganzzahliges Vielfaches davon sein muss.

Der Modulschlitten 20 (22) umfasst überdies eine Vielzahl an Befestigungsleisten 94, wovon jede mit einem Jeweiligen der Fächer 32 (34) durch das flexible Substrat 92 verbunden ist. Gewindezapfen 96, die sich von unteren Enden jedes Fachs 32 (34) erstrecken, erstrecken sich durch gefluchtete Öffnungen 100, 102 im flexiblen Substrat 92 und in den Befestigungsleisten 94. Muttern 104 oder dergleichen werden auf die Zapfen 96 unter den Befestigungsleisten 94 geschraubt, um die Verbindung zu sichern.

Vertiefungen 106, die in gegenüberliegenden Enden jeder der Befestigungsleisten 94 definiert sind, definieren zusammen Führungsschlitze 110, die sich entlang gegenüberliegender Seiten des Modulschlittens 20 (22) erstrecken. Die Führungsschlitze 110 greifen in die gegenüberliegenden seitlichen Abschnitte der Schlittenführung 50, um das Halten des Modulschlittens 20 (22) in der Rundlaufbahn 24 zu unterstützen (siehe Figur 2).

Während in der abgebildeten Ausführungsform die Schlittenführung 50 in die Führungsschlitze 110 ragt, könnte die relative Position dieser Elemente innerhalb des Schutzumfangs der Erfindung geändert werden, so dass Vorsprünge, die an den Modulschlitten ausgebildet sind, in Schlitze eingreifen, die im Modulrahmen 12 definiert sind. Zusätzlich sind auf der Unterseite jeder Befestigungsleiste 94 Antriebselementvertiefungen 112 definiert, die zusammen jeweils Durchgänge 114, 116 für die Endlosantriebe 20, 22 definieren.

Eine Vorderkanten-Befestigungsleiste 120 ist nahe der Vorderkante 82 angeschlossen. Die entlang der Vorderkante 84 angeschlossene Befestigungsleiste wäre das Spiegelbild der Befestigungsleiste 120 und könnte eigentlich exakt die gleiche Leiste sein, rückwärts angebracht. Ein Vorsprung 122 erstreckt sich unter der Vorderkanten-Befestigungsleiste 120, um fest in dem Endlosantrieb 26 (30) einzugreifen, wenn der Modulschlitten 20 (22) angeschlossen ist. Eine Vorderkanten-Verstärkungsleiste 124 überlagert den Fuß des Fachs 32 (34), das der Vorderkanten-Befestigungsleiste 120 entspricht, und eine Vorderkantenummantelung 126 verbirgt die Vorderkante 82 (84) und ist zwischen dem Fach 32 und der Vorderkanten-Befestigungsleiste 120 eingefügt. Eine Vielzahl Gewindebefestigungsmittel 130, wie etwa Maschinenschrauben, erstrecken sich durch gefluchtete Öffnungen in der Verstärkungsleiste 124, dem Fuß des Fachs 32, der Ummantelung 126, dem flexiblen Substrat 92 und der Vorderkanten-Befestigungsleiste 120 und ihrem Vorsprung 122. Die Gewindebefestigungsmittel 130 werden in den komplementären Gewindebefestigungsmitteln aufgenommen, die in den vorgeformten Vertiefungen 80 in einem der Segmente 74 des Endlosantriebs 26 (30) angeordnet sind.

In Betrieb arbeitet das Rundlauf-Gruppierungsmodul 10 wie herkömmliche Rundlauf-Gruppierungsmodule. Wenn das Rundlauf-Gruppierungsmodul 10 umgestellt werden soll, um die Konfiguration der Fächer 32, 34 (auf einem oder beiden Modulschlitten 20, 22) zu ändern, werden die Gewindebefestigungsmittel 130 entfernt, um die Modulschlitten 20, 22 von ihren jeweiligen Endlosantrieben 26, 30 zu lösen. Segmente 52 der Schlittenführung 50 werden abgenommen (vorteilhafterweise die oberen, mittleren Segmente 52) und die Modulschlitten 20, 22 werden aus der Führung 50 und weg vom Rundlauf-Gruppierungsmodul 10 geschoben. Anders konfigurierte Modulschlitten 20, 22 (oder ähnlich konfigurierte, im Fall eines Austauschs aufgrund von Bruch oder eines sonstigen Problems) werden zurück auf die Führung 50 geschoben und mit den Gewindebefestigungsmitteln 130 auf den Endlosantrieben 26, 30 befestigt. Die Schlittenführungssegmente 52 werden wieder angeordnet und das Rundlauf-Gruppierungsmodul 10 ist bereit für die Fortsetzung des Betriebs.

Aus der vorhergehenden Beschreibung wird zu erkennen sein, dass ein Rundlauf-Gruppierungsmodul mit abnehmbaren Modulschlitten gemäß der vorliegenden Erfindung eine viel schnellere und einfachere Umstellung der Fächerkonfiguration erlaubt, einschließlich der Fächermenge und/oder -teilung, was zu einer rascheren Änderung zur Bewältigung unterschiedlicher Artikelkonfigurationen und einer kürzeren Stillstandszeit der Verpackungslinie führt. Überdies wird zu verstehen sein, dass die abgebildeten und beschriebenen Ausführungsformen für Beispiel- und Veranschaulichungszwecke bereitgestellt sind; die vorliegende Erfindung ist jedoch nicht notwendigerweise darauf beschränkt. Vielmehr wird der Fachmann erkennen, dass verschiedene Änderungen sowie Anpassungen an bestimmte Umstände in den Schutzumfang der angehängten Ansprüche fallen.

### Bezugszeichenliste

- 10: Rundlauf-Gruppierungsmodul
- 12: Modulrahmen
- 14: erste Antriebsbaugruppe
- 16: zweite Antriebsbaugruppe

- 20: erster Modulschlitten
- 22: zweiter Modulschlitten
- 24: Rundlaufbahn
- 26, 30: Endlosantrieb
- 32, 34: Fächer
- 36: Artikel

- 40: Ladepunkt
- 42: Entladepunkt
- 44: seitlicher Rahmenabschnitte
- 46: mittlerer Rahmenabschnitt
- 48: Tragwerk

- 50: Schlittenführung
- 52: abnehmbare Segmente
- 54, 56: Antriebswellen

- 60, 62: Antriebsscheiben
- 64, 66: Freilaufscheiben
- 70, 72: Servomotoren
- 74: Segmente
- 76: Segmentteilung

- 80: Vertiefung
- 82, 84: Vorderkante

- 90: Fächerteilung
- 92: flexibles Substrat
- 94: Befestigungsleisten
- 96: Zapfen

- 100, 102: gefluchtete Öffnungen
- 104: Muttern
- 106: Vertiefungen
- 110: Führungsschlitze
- 112: Antriebselementvertiefungen
- 114, 116: Durchgänge

- 120: Vorderkanten-Befestigungsleiste
- 122: Vorsprung
- 124: Verstärkungsleiste
- 126: Ummantelung

- 130: Gewindebefestigungsmittel

## Patentansprüche

1. Rundlauf-Gruppierungsmodul (10), umfassend:
einen Modulrahmen (12), der eine Rundlaufbahn (24) definiert;
eine erste Antriebsbaugruppe (14), die am Modulrahmen (12) befestigt ist und einen ersten Endlosantrieb (26) umfasst, der sich um die Rundlaufbahn (24) erstreckt,
eine zweite Antriebsbaugruppe (16), die am Modulrahmen (12) befestigt ist und einen zweiten Endlosantrieb (30) umfasst, der sich um die Rundlaufbahn (24) erstreckt, **gekennzeichnet durch**
einen ersten Modulschlitten (20), der lösbar an dem ersten Endlosantrieb (26) angeschlossen ist und eine erste Vielzahl an Fächern (32), ein erstes flexibles Substrat (92) und eine erste Vielzahl an Befestigungsleisten (94) umfasst, wobei jede der Befestigungsleisten (94) mit einem Entsprechenden der ersten Vielzahl an Fächern (32) durch gefluchtete Öffnungen (100) des ersten flexiblen Substrats (92) hindurch verbunden ist, wodurch die erste Vielzahl an Fächern (32) miteinander mittels des ersten flexiblen Substrats (92) flexibel verbunden ist, und
einen zweiten Modulschlitten (22), der lösbar an dem zweiten Endlosantrieb (30) angeschlossen ist und eine zweite Vielzahl an Fächern (34), ein zweites flexibles Substrat (92) und eine zweite Vielzahl an Befestigungsleisten (94) umfasst, wobei jede der Befestigungsleisten (94) mit einem Entsprechenden der zweiten Vielzahl an Fächern (34) durch gefluchtete Öffnungen (100) des zweiten flexiblen Substrats (92) hindurch verbunden ist, wodurch die zweite Vielzahl an Fächern (34) miteinander mittels des zweiten flexiblen Substrats (92) flexibel verbunden ist, sowie
eine Schlittenführung (50), die den ersten und zweiten Modulschlitten (20, 22) während der Bewegung des ersten und zweiten Endlosantriebs (26, 30) in der Rundlaufbahn (24) hält.

2. Rundlauf-Gruppierungsmodul (10) nach Anspruch 1, wobei die Schlittenführung (50) gegenüberliegende seitliche Abschnitte umfasst, um in gegenüberliegende Seiten des ersten und zweiten Modulschlittens (22) einzugreifen.

3. Rundlauf-Gruppierungsmodul (10) nach Anspruch 2, wobei der erste und zweite Modulschlitten (22) Führungsschlitze (110) entlang der gegenüberliegenden Seiten davon definieren, wobei in die Führungsschlitze (110) von den gegenüberliegenden seitlichen Abschnitten der Schlittenführung (50) eingegriffen wird.

4. Rundlauf-Gruppierungsmodul (10) nach Anspruch 3, wobei die Führungsschlitze (110) von gegenüberliegenden Enden der ersten und zweiten Vielzahl an Befestigungsleisten (94) zusammen definiert werden.

## Claims

1. Rotary grouping module (10), comprising:
a module frame (12), which defines a rotary track (24);
a first drive group (14), which is secured to the module frame (12) and comprises a first endless drive (26), which extends around the rotary track (24),
a second drive group (16), which is secured to the module frame (12) and comprises a second endless drive (30), which extends around the rotary track (24),
**characterised by**
a first module carriage (20), which is releasably connected to the first endless drive (26), and a first plurality of compartments (32), a first flexible substrate (92), and a first plurality of securing strips (94), wherein each of the securing strips (94) is connected through a corresponding unit of the first plurality of compartments (32) by way of flush-arranged openings (100) of the first flexible substrate (92), as a result of which the first plurality of compartments (32) are flexibly connected to one another by means of the first flexible substrate (92), and
comprises a second module carriage (22), which is releasably connected to the second endless drive (30), and a second plurality of compartments (34), a second flexible substrate (92), and a second plurality of securing strips (94), wherein each of the securing strips (94) is connected through a corresponding unit of the second plurality of compartments (34) by way of flush-arranged openings (100) of the second flexible substrate (92), as a result of which the second plurality of compartments (34) are flexibly connected to one another by means of the second flexible substrate (92), and
a carriage guide (50), which holds the first and second module carriages (20, 22) during the movement of the first and second endless drives (26, 30) in the rotary track (24).

2. Rotary grouping module (10) according to claim 1, wherein the carriage guide (50) comprises opposing side sections, in order to engage in opposing sides of the first and second module carriages (22).

3. Rotary grouping module (10) according to claim 2, wherein the first and second module carriages (22) define guide slots (110) along the opposing sides, and wherein the guide slots (110) are engaged by the opposing side sections of the carriage guide (50).

4. Rotary grouping module (10) according to claim 3, wherein the guide slots (110) are defined together by opposing ends of the first and second plurality of securing strips (94).

## Revendications

1. Module de groupage à trajet circulaire (10), comprenant :
un cadre de module (12), qui définit un trajet circulaire (24) ;
un premier bloc d'entraînement (14), qui est fixé au cadre de module (12) et comprend un premier entraînement sans fin (26), qui s'étend autour du trajet circulaire (24),
un deuxième bloc d'entraînement (16), qui est fixé au cadre de module (12) et comprend un deuxième entraînement sans fin (30), qui s'étend autour du trajet circulaire (24),
**caractérisé par**
un premier chariot de module (20), qui est raccordé de manière amovible au premier entraînement sans fin (26) et comprend une première pluralité de compartiments (32), un premier substrat souple (92) et une première pluralité de barres de fixation (94), dans lequel chacune des barres de fixation (94) est reliée à l'un correspondant de la première pluralité de compartiments (32) à travers des ouvertures alignées (100) du premier substrat souple (92), moyennant quoi la première pluralité de compartiments (32) sont reliés de manière souple les uns aux autres au moyen du premier substrat souple (92), et
un deuxième chariot de module (22), qui est raccordé de manière amovible au deuxième entraînement sans fin (30) et comprend une deuxième pluralité de compartiments (34), un deuxième substrat souple (92) et une deuxième pluralité de barres de fixation (94), dans lequel chacune des barres de fixation (94) est reliée à l'un correspondant de la deuxième pluralité de compartiments (34) à travers des ouvertures alignées (100) du deuxième substrat souple (92), moyennant quoi la deuxième pluralité de compartiments (34) sont reliés de manière souple les uns aux autres au moyen du deuxième substrat souple (92), ainsi que
un guidage de chariot (50), qui retient le premier et le deuxième chariot de module (20, 22) pendant le déplacement du premier et du deuxième entraînement sans fin (26, 30) dans le trajet circulaire (24).

2. Module de groupage à trajet circulaire (10) selon la revendication 1, dans lequel le guidage de chariot (50) comprend des sections latérales opposées pour venir en prise avec des côtés opposés du premier et du deuxième chariot de module (22).

3. Module de groupage à trajet circulaire (10) selon la revendication 2, dans lequel le premier et le deuxième chariot de module (22) définissent des fentes de guidage (110) le long des côtés opposés de ceux-ci, dans lequel les sections latérales opposées du guidage de chariot (50) viennent en prise avec les fentes de guidage (110).

4. Module de groupage à trajet circulaire (10) selon la revendication 3, dans lequel les fentes de guidage (110) sont définies ensemble par des extrémités opposées de la première et la deuxième pluralité de barres de fixation (94).
